# FASCICULE DE BREVET EUROPEEN

(11) **EP 0 762 984 B1**
(45) Date de publication et mention de la délivrance du brevet: **11.11.1998**
(21) Numéro de dépôt: 95934572.9
(22) Date de dépôt: 09.05.1995
(51) Int. Cl.: B65G 47/61, A47G 25/14, B65G 1/04

(54) **INSTALLATION DE TRANSPORT D'ARTICLES SUSPENDUS AVEC UN POSTE DE DECHARGEMENT**
TRANSPORTVORRICHTUNG FÜR HÄNGENDE GEGENSTÄNDE MIT EINER ENTLADESTATION
TRANSPORT DEVICE FOR HANGING ARTICLES COMPRISING A HANDLING DEVICE

(30) Priorité: 10.05.1994 FR 9406020
(43) Date de publication de la demande: 19.03.1997
(73) Titulaire: COMPAGNIE FINANCIERE COFINOR, S.A., F-14100 Lisieux (FR)
(72) Inventeur: GUINAMARD, Jean, F-59650 Villeneuve d'Ascq (FR); HENNEMAN, Alain, F-59290 Wasquehal (FR); GOMBERT, David, Rue du 8 Mai, F-62400 Bethune (FR)
(74) Mandataire: Ecrepont, Robert
(86) Numéro de dépôt international: FR9500603
(87) Numéro de publication internationale: WO9530613

(56) Documents cités:
- EP-A- 0 256 996
- EP-A- 0 423 081
- FR-A- 1 424 712
- GB-A- 2 168 938

## Description

L'invention se rapporte à une installation de transport d'articles suspendus, notamment de vêtements portés par des cintres, pourvue d'au moins une barre de réception.

Classiquement, une telle installation comprend :
- un élément de transport sans fin qui, porté par un bâti, définit pour les articles qu'il porte un parcours prédéterminé au long duquel cet élément sans fin se déplace, lequel élément sans fin présente des zones d'ancrage pour des crochets auxquels sont suspendus les articles, lesquels crochets étant orientés sensiblement perpendiculairement à la trajectoire,
- au moins un poste de déchargement d'au moins certains des articles.

Ce poste de déchargement comprend :
- un moyen de préhension d'un crochet,
- un moyen de déplacement de ce moyen de préhension entre au moins deux positions selon un axe situé dans un plan sensiblement perpendiculaire à la tangente à la trajectoire de l'élément de transport sans fin au point de déchargement correspondant, ce moyen de déplacement comprenant un rail porteur et un moyen moteur et,
- un moyen de réception pour accueillir les articles extraits de l'élément de transport sans fin.

On connaît comme élément de transport sans fin une bande sans fin dont le grand axe de la section est disposé sensiblement verticalement, cette bande qui est guidée en translation sur un rail (EP-A-423 081) présente sur toute sa longueur des lumières dans lesquelles peuvent s'engager les crochets des articles à suspendre.

Le moyen de préhension comprend une pince guidée en translation sur une structure et deux mâchoires.

De telles installations sont généralement utilisées pour trier les articles transportés.

A cet effet, chacun des articles est repéré par rapport au numéro de la susdite lumière dans laquelle est engagé son crochet puis, sous le contrôle d'une méthode de tri en fonction d'au moins un critère, les articles sont, selon un ordre prédéterminé, déchargés.

Pour cela, en leur faisant faire autant de tours que nécessaire, les moyens de commande de l'installation amènent les lumières ou cases selon l'ordre déterminé devant le poste de déchargement où le moyen de préhension saisit le crochet correspondant puis amène celui-ci au dessus de la barre réceptrice où il le lache.

La barre réceptrice est, bien entendu, inclinée sur l'horizontale pour que l'article s'éloigne par gravité.

Ce type de convoyeur présente malheureusement plusieurs inconvénients.

Avec cette installation connue, pour placer le cintre sur la barre réceptrice, la barre réceptrice se situant perpendiculairement à la trajectoire de l'élément de transport sans fin, la pince qui saisit le crochet doit, sur son parcours, faire un quart de tour pour positionner le crochet et le cintre parallèlement à la trajectoire de déplacement du convoyeur avant de lacher le crochet au dessus de la barre réceptrice.

De ce fait :
- d'une part, il faut prévoir des moyens de commande en rotation sur le moyen de préhension et,
- d'autre part, notamment, comme précisé plus haut, si le vêtement est encore partiellement pincé entre les deux vêtements qui l'enserrent et ce, notamment lorsqu'il s'agit de vêtements longs, il faut veiller à ce que, lors du redémarrage de l'élément de transport sans fin, les articles attenants ne retiennent pas l'article extrait.

En effet, bien que le crochet de ce vêtement soit sur la barre réceptrice, il existe un risque non négligeable de dégager le crochet de la barre réceptrice d'autant plus que la traction se fait sensiblement selon l'axe de la barre.

Egalement, pour gagner de la place et obtenir une vitesse de déchargement convenable, les cases ne sont séparées que par une faible distance, de l'ordre de trente millimètres, de sorte que chaque article est relativement proche l'un de l'autre.

Avec les dispositifs connus, lorsqu'on extrait un article, en soulevant le crochet pris dans la lumière, on risque de soulever les crochets des lumières situées de part et d'autre du crochet considéré et, ce faisant, de faire tomber accidentellement les vêtements correspondants.

Un des résultats que l'invention vise à obtenir est une installation de transport de vêtements suspendus du type cité plus haut qui remédie à ces inconvénients.

A cet effet, elle a pour objet une telle installation caractérisée en ce que le moyen de réception est une barre, qui est montée sensiblement parallèlement à la tangente à la trajectoire de l'élément de transport sans fin au point de déchargement et cette barre de réception :
- d'une part, présente dans une zone dite zone de transfert située sous à l'aplomb de la trajectoire de l'élément de préhension une solution de continuité permettant au moins à la base du crochet de passer au delà de la barre réceptrice et,
- d'autre part, comprend un moyen dit de prolongation pour, momentanément, prolonger la dite barre dans la zone de transfert précitée afin de pouvoir à volonté rétablir la continuité et laisser tomber le crochet du cintre sur le moyen de prolongation.

L'invention sera bien comprise à l'aide de la description ci-après faite à titre d'exemple non limitatif en regard du dessin ci-annexé qui représente schématiquement :

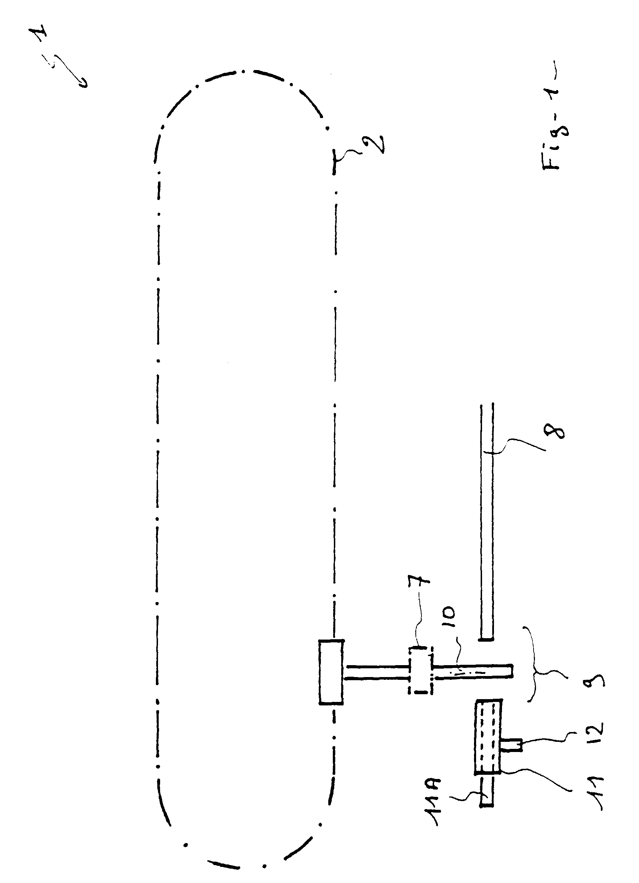

- figure 1 : vue de dessus d'une installation,

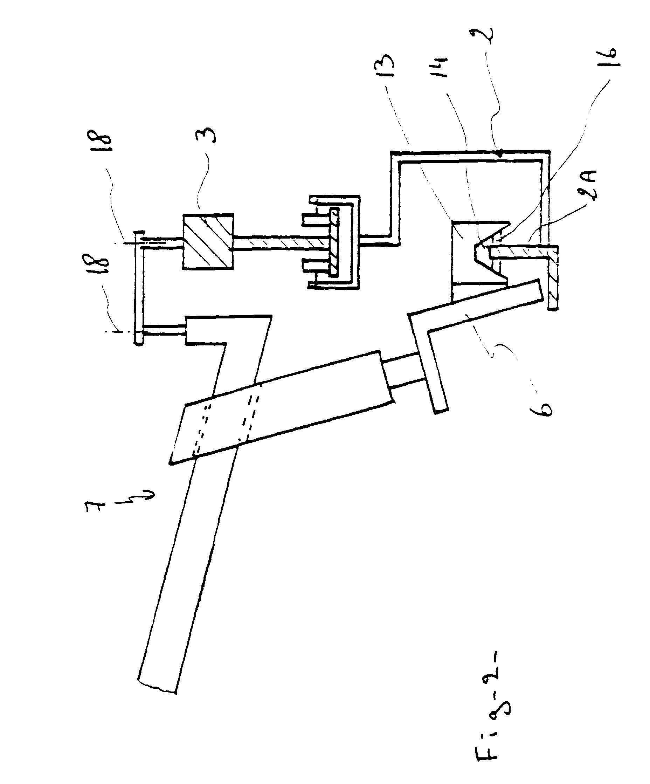

- figure 2 : vue latérale d'un dispositif de prélèvement,

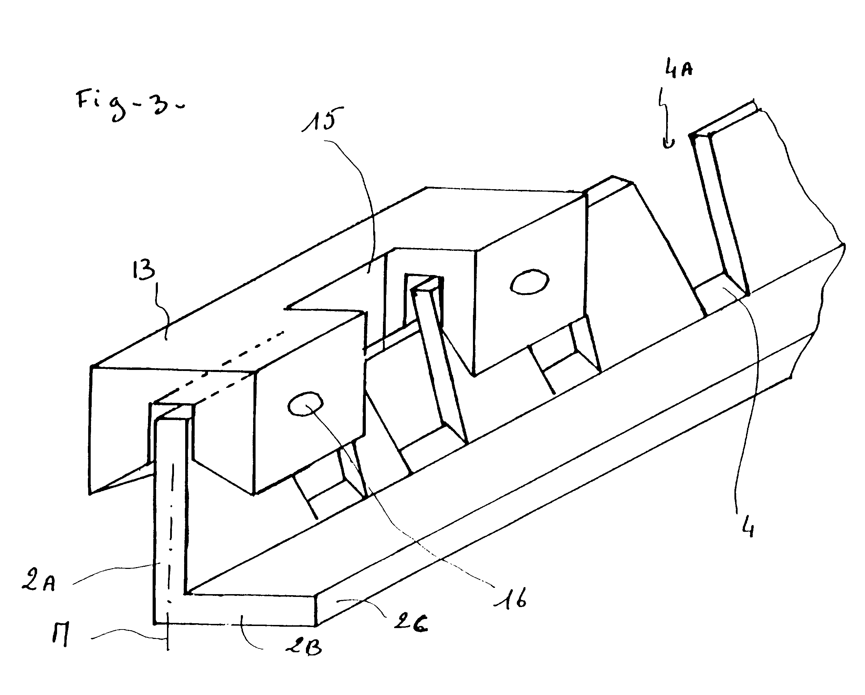

- figure 3 : vue d'un détail de la figure 2.

En se reportant au dessin, on voit une installation 1 de manutention d'articles.

Classiquement, une telle installation comprend :
- un élément 2 de transport sans fin qui, porté par un bâti 3, définit pour les articles qu'il porte un parcours prédéterminé, lequel élément sans fin 2 présente des zones d'ancrage 4 pour des crochets auxquels sont suspendus les articles, lesquels crochets étant orientés sensiblement perpendiculairement à la trajectoire,
- au moins un poste de déchargement d'au moins certains des articles, par exemple, pour effectuer une opération de tri.
- un moyen 6 de préhension d'un crochet,
- un moyen 7 de déplacement de ce moyen de préhension entre au moins deux positions selon un axe situé dans un plan sensiblement perpendiculaire à la tangente à la trajectoire de l'élément de transport sans fin au point de déchargement, ce moyen de déplacement comprenant un rail porteur et un moyen moteur et,
- une barre 8 de réception pour accueillir les articles extraits de l'élément de transport sans fin.

Selon l'invention, la barre 8 de réception est montée sensiblement parallèlement à la tangente à la trajectoire au point de déchargement et cette barre de réception 8 :
- d'une part, présente dans la zone 9 dite zone de transfert située à l'aplomb de la trajectoire 10 de l'élément de préhension une solution de continuité permettant au moins à la base du crochet de passer au delà de la barre réceptrice et,
- d'autre part, comprend un moyen 11 dit de prolongation pour, momentanément, prolonger la dite barre dans la zone 9 de transfert précitée afin de pouvoir à volonté rétablir la continuité.

Ainsi, après que le moyen 6 de préhension aura saisi le crochet, il pourra amener celui-ci au dessus de la zone 9 de transfert sans que, lors du déplacement, le crochet n'interfère avec la barre 8, le moyen 11 de prolongation pourra ensuite se substituer momentanément à la zone dépourvue de barre afin que, lorsque la pince s'ouvrira, laissera tomber le crochet, celui-ci venant s'accrocher sur le moyen 11 dit de prolongation et glisser ensuite sur la barre pour être évacué notamment par gravité.

Outre que cela ne nécessite plus de prévoir des moyens pour faire tourner le moyen de préhension, le crochet qui vient prendre appui sur la barre de réception a son ouverture orientée de telle sorte qu'il est impossible de le décrocher même lorsque l'article reste en partie maintenu par les autres articles portés par le convoyeur.

Dans un mode préféré de réalisation, le moyen de prolongation est constitué par un coulisseau de longueur appropriée qui coulisse sur un élément 11A de guidage.

De préférence, ce coulisseau comprend un doigt 12 de commande de l'ouverture de la pince du moyen de préhension de sorte que, lorsqu'il vient se mettre en place, il commande l'ouverture de la pince par appui de ce doigt sur une surface de commande que présente une des mâchoires de la pince.

Avantageusement :
- d'une part, l'élément sans fin 2 est constitué au moins localement d'une lame 2A dont le grand axe de la section est sensiblement vertical et qui comprend une série d'encoches 4A sensiblement en U ouvertes sur le dessus, délimitant chacune une zone 4 d'accrochage et,
- d'autre part, le moyen 6 de préhension comprend une pièce 13 dite de centrage qui, s'étendant sur une longueur au moins égale à la longueur occupée par trois zones d'accrochage consécutives, présente :
   . une gorge 14 tournée vers le bas et apte à coiffer au moins trois zones d'accrochage,
   . en partie médiane de cette pièce de centrage, une découpe 15 latérale permettant au moyen de préhension de saisir le crochet placé sur l'encoche et de l'extraire et,
   . des moyens 16 de verrouillage en translation de cette pièce de centrage sur les zones d'accrochage.

Vue en bout, la gorge a, de préférence, approximativement une section en V inversé.

Ces moyens permettent :
- d'une part, de verrouiller les crochets des cintres situés de part et d'autre de celui que l'on souhaite saisir et,
- d'autre part, même si l'élément sans fin n'est pas exactement arrêté au droit du moyen de préhension, de permettre à ce dernier de se recentrer.

Avantageusement, la lame 2A constituant l'élément sans fin présente sur toute sa longueur un talon 2B orienté orthogonalement à son plan médian vertical et le bord libre 2C de ce talon est distant du plan médian M d'une valeur de l'ordre de la profondeur du crochet mesuré à partir de son axe vertical de suspension.

Le crochet a généralement une forme en arc de cercle et la profondeur est alors sensiblement égale au rayon de centrage du crochet.

Ceci interdit ou au moins limite la rotation du crochet et donc permet de maintenir le crochet sensiblement dans un plan perpendiculaire à la trajectoire.

Les moyens 16 de verrouillage en translation de la pièce de centrage sur l'élément sans fin comprennent au moins deux butées qui coopèrent avec les chants opposés d'une découpe en U.

Ces butées sont, par exemple, portées par une tige traversant transversalement la pièce de centrage.

Les découpes que présente l'élément sans fin sont, par exemple, en V.

Avantageusement, le moyen de préhension est mobile en translation selon une direction parallèle à la tangente au point de déchargement.

A cet effet, le rail porteur est relié au bâti par une biellette articulée à chaque extrémité sur un axe vertical 18 permettant à la pièce de centrage un auto positionnement.

## Revendications

1. Installation de transport de vêtements suspendus à des cintres comprenant :
- un élément (2) de transport sans fin qui, porté par un bâti (3), définit pour les articles qu'il porte un parcours prédéterminé au long duquel cet élément sans fin se déplace, lequel élément sans fin (2) présente des zones d'ancrage (4) pour des crochets auxquels sont suspendus les articles, lesquels crochets sont orientés sensiblement perpendiculairement à la trajectoire,
- au moins un poste de déchargement d'au moins certains des articles,
ce poste de déchargement comprenant :
- un moyen (6) de préhension d'un crochet,
- un moyen (7) de déplacement de ce moyen de préhension entre au moins deux positions selon un axe situé dans un plan sensiblement perpendiculaire à la tangente à la trajectoire de l'élément de transport sans fin au point de déchargement, ce moyen de déplacement comprenant un rail porteur et un moyen moteur et,
- un moyen (8) de réception pour accueillir les articles extraits de l'élément de transport sans fin,
cette installation étant **CARACTERISEE** en ce que le moyen de réception est une barre, qui est montée sensiblement parallèlement à la tangente à la trajectoire de l'élément de transport sans fin au point de déchargement et en ce que cette barre de réception (8) :
- d'une part, présente dans une zone (9) dite zone de transfert située sous et à l'aplomb de la trajectoire (10) de l'élément de préhension une solution de continuité permettant au moins à la base du crochet de passer au delà de la barre réceptrice et,
- d'autre part, comprend un moyen (11) dit de prolongation pour, momentanément, prolonger la dite barre dans la zone (9) de transfert précitée afin de pouvoir à volonté rétablir la continuité et laisser tomber le crochet du cintre sur le moyen de prolongation.

2. Installation selon la revendication 1 **caractérisée** en ce que le moyen de prolongation est constitué par un coulisseau de longueur appropriée qui coulisse sur un élément (11A) de guidage.

3. Installation selon la revendication 2 **caractérisée** en ce que le coulisseau comprend un doigt (12) de commande de l'ouverture d'une pince du moyen de préhension.

4. Installation selon la revendication 1 **caractérisée** en ce que :
- d'une part, l'élément sans fin (2) est constitué au moins localement d'une lame (2A) dont le grand axe de la section est sensiblement vertical et qui comprend une série d'encoches (4A) sensiblement en U ouvertes sur le dessus, délimitant chacune une zone (4) d'accrochage et,
- d'autre part, le moyen (6) de préhension comprend une pièce (13) dite de centrage qui, s'étendant sur une longueur au moins égale à la longueur occupée par trois zones d'accrochage consécutives, présente :
. une gorge (14) tournée vers le bas et apte à coiffer au moins trois zones d'accrochage,
. en partie médiane de cette pièce de centrage, une découpe (15) latérale permettant au moyen de préhension de saisir le crochet placé sur l'encoche et de l'extraire et,
. des moyens (16) de verrouillage en translation de cette pièce de centrage sur les zones d'accrochage.

5. Installation selon la revendication 4 **caractérisée** en ce que la gorge a approximativement une section en V inversé.

6. Installation selon la revendication 4 ou 5 **caractérisée** en ce que la lame (2A) constituant l'élément sans fin présente sur toute sa longueur un talon (2B) orienté orthogonalement à son plan médian vertical et le bord libre (2C) de ce talon est distant du plan médian M d'une valeur de l'ordre de la profondeur du crochet mesuré à partir de son axe vertical de suspension.

7. Installation selon l'une quelconque des revendications 4 à 6 **caractérisée** en ce que les moyens (16) de verrouillage en translation de la pièce de centrage sur l'élément sans fin comprennent au moins deux butées qui coopèrent avec les chants opposés d'une découpe en U.

## Patentansprüche

1. Förderanlage für Kleidungsstücke, die auf Bügeln aufgehängt sind, welche folgendes aufweist:
- ein Endlosförderteil (2), welches auf einem Rahrnen (3) gelagert ist und für die Gegenstände, die es tragt, eine vorgegebene Bahn definiert, entlang welcher sich dieses Endlosförderteil bewegt, wobei das Endlosförderteil (2) Verankerungsbereiche (4) für Haken aufweist, an welchen die Gegenstände aufgehängt sind, wobei die Haken im wesentlichen senkrecht zur Bahn ausgerichtet sind,
- mindestens eine Abnahmestation zum Abnehmen mindestens bestimmter Gegenstände,
wobei diese Abnahmestation folgendes aufweist:
- eine Einrichtung (6) zum Erfassen eines Hakens,
- eine Einrichtung (7) zum Verlagern dieser Erfassungseinrichtung zwischen mindestens zwei Positionen entlang einer Achse, die in einer zur Tangente der Bahn des Endlosförderteils am Abnahmepunkt im wesentlichen senkrechten Ebene liegt, wobei diese Verlagerungseinrichtung eine Tragschiene und eine Antriebseinrichtung umfaßt, und
- eine Übernahmeeinrichtung (8) zum Aufnehmen der vom Endlosförderteil entnommenen Gegenstände,
**dadurch GEKENNZEICHNET**, daß die Übernahmeeinrichtung eine Stange ist, welche im wesentlichen parallel zur Tangente an die Bahn des Endlosförderteils am Abnahmepunkt angebracht ist, und daß diese Übernahmestange (8):
- zum einen in einem sogenannten Übergabebereich (9), der unterhalb der Bahn (10) der Erfassungseinrichtung lotrecht zu dieser eine offene Stelle aufweist, welche den Durchtritt zumindest der Basis des Hakens über die Übernahmestange hinaus gestattet, und
- zum anderen eine sogenannte Verlängerungseinrichtung (11) aufweist, welche die Stange momentan in dem vorgenannten Übergabebereich so verlängert, daß nach Belieben der stetige Verlauf wiederherstellbar ist und der Haken des Bügels auf die Verlängerungseinrichtung fallen gelassen werden kann.

2. Förderanlage nach Anspruch 1, dadurch **gekennzeichnet**, daß die Verlängerungseinrichtung aus einem Schieber geeigneter Länge besteht, welcher auf einem Führungsteil (11A) gleitet.

3. Förderanlage nach Anspruch 2, dadurch **gekennzeichnet**, daß der Schieber einen Zapfen (12) zum Ansteuern der Öffnungsbewegung eines Klemmteils der Erfassungseinrichtung aufweist.

4. Förderanlage nach Anspruch 1, dadurch **gekennzeichnet**, daß:
- zum einen das Endlosförderteil (2) zumindest örtlich begrenzt eine Zunge (2A) aufweist, deren große Querschnittsachse im wesentlichen vertikal verläuft und die eine Reihe von Einschnitten (4A) im wesentlichen in offener U-Form auf der Oberseite aufweist, von denen jeder einen Einhängbereich (4) begrenzt, und
- zum anderen die Erfassungseinrichtung (6) ein sogenanntes Zentrierteil (13) aufweist, welches sich über eine Länge erstreckt, die zumindest gleich der von drei aufeinanderfolgenden Einhängbereichen eingenommenen Länge ist und folgendes aufweist;
• eine nach unten gekehrte Auskehlung (14), die so ausgebildet ist, daß sie zumindest drei Einhängbereiche überdeckt,
• im mittleren Bereich dieses Zentrierteils einen seitlichen Ausschnitt (15), welcher es der Erfassungseinrichtung ermöglicht, den über den Einschnitt gebrachten Haken zu erfassen und herauszunehmen, und
• eine Verriegelungseinrichtung (16), mit welcher dieses Zentrierteil über den Einhängbereichen verschiebbar ist.

5. Förderanlage nach Anspruch 4, dadurch **gekennzeichnet,** daß die Auskehlung in etwa einen umgekehrt V-förmigen Querschnitt aufweist.

6. Förderanlage nach Anspruch 4 oder 5, dadurch **gekennzeichnet**, daß die das Endlosförderteil bildende Zunge (2A) über ihre gesamte Länge einen Absatz (2B) aufweist, der senkrecht zur vertikalen Mittelebene der Zunge ausgerichtet ist, und daß der freie Rand (2C) dieses Absatzes von der Mittelebene M um einen Abstand in der Größenordnung der Tiefe des Hakens, gemessen von dessen vertikaler Aufhängachse aus, entfernt ist.

7. Förderanlage nach einem der Ansprüche 4 bis 6,, dadurch **gekennzeichnet**, daß die Verriegelungseinrichtung mit Verschiebung des Zentrierteils auf dem Endlosförderteil mindestens zwei Anschläge aufweist, die mit den sich gegenüber stehenden Kanten eines U-Ausschnitts zusammenwirken.

## Claims

1. An installation for transporting garments suspended on coat hangers comprising:
- an endless transporting element (2) which is supported by a structure (3) and defines for the articles it carries a pre-determined route along which the endless element moves, the endless element (2) having anchoring zones (4) for the hooks on which the articles are suspended, the hooks being aligned substantially perpendicularly to the path travelled,
- at least one station for unloading at least some of the articles, the unloading station comprising:
- means (6) for gripping a hook,
- means (7) for moving this gripping means between at least two positions along an axis located in a plane which is substantially perpendicular to the tangent of the path travelled by the endless transporting element to the unloading point, the moving means comprising a supporting rail and motor means, and
- receiving means (8) for collecting the articles removed from the endless transporting element,
the installation being characterised in that the receiving means is a bar which is mounted substantially parallel to the tangent of the path travelled by the endless transporting element to the unloading point, and in that the receiving bar (8):
- on the one hand, in a zone (9) known as the transfer zone located beneath and perpendicular to the path travelled (10) by the gripping element offers an interruption by enabling at least the base of the hook to pass beyond the receiving bar, and,
- on the other hand, comprises means (11) known as extension means for temporarily extending the bar in the aforementioned transfer zone (9) in order to be able, as required, to re-establish continuity and to drop the hook of the coat hanger onto the extension means.

2. An installation according to claim 1, characterised in that the extension means consists of a slide of suitable length which slides on a guide element (11A).

3. An installation according to claim 2, characterised in that the slide comprises a finger (12) for controlling the opening of a gripper of the gripping means.

4. An installation according to claim 1, characterised in that:
- on the one hand, the endless element (2) consists, at least locally, of a blade, the major axis of whose cross-section is substantially vertical and which comprises a series of notches (4A), which are substantially U-shaped and open at the top, each delimiting a hooking zone (4), and,
- on the other hand, the gripping means (6) comprises a part (13), known as a centring part, which extends over a length at least equal to the length occupied by three consecutive hooking zones and has:
. a groove (14) facing downwards and capable of covering at least three hooking zones,
. in the median portion of this centring part, a lateral cut-out (15) enabling the gripping means to grip and withdraw the hook placed on the notch, and
. means (16) for blocking the movement of this centring part on the hooking zones.

5. An installation according to claim 4, characterised in that the groove is of approximately inverted V-shaped cross-section.

6. An installation according to claim 4 or 5, characterised in that the blade (2A) constituting the endless element has, over its entire length, a projection (2B) aligned at right angles to its vertical median plane, and that the distance between the free edge (2C) of this projection and the median plane M has a value of the order of the depth of the hook, measured from its vertical suspension axis.

7. An installation according to any one of claims 4 to 6, characterised in that the movement blocking means (16) of the centring part on the endless element comprises at least two stops which cooperate with the opposing sides of a U-shaped cut-out.
